# EUROPEAN PATENT APPLICATION

(11) **EP 4 836 085 A1**
(43) Date of publication of application: **04.11.2026**
(21) Application number: 24919687.4
(22) Date of filing: 15.08.2024
(51) Int. Cl.: H01M 10/613

(54) **BATTERY AND ELECTRIC DEVICE**

(30) Priority: 22.01.2024 CN 202420156495 U
(71) Applicant: Contemporary Amperex Technology Co., Limited, Ningde, Fujian 352100 (CN)
(72) Inventor: WU, Shaoji, Ningde, Fujian 352100 (CN); SHEN, Dan, Ningde, Fujian 352100 (CN); SHI, Junchao, Ningde, Fujian 352100 (CN)
(74) Representative: Ziebig Hengelhaupt Intellectual Property Attorneys Patentanwaltskanzlei PartGmbB
(86) International application number: PCT/CN2024/112539
(87) International publication number: WO 2025/156605

(57) **Abstract**

Embodiments of the present application provide a battery and an electric device. The battery comprises a plurality of battery cells, a plurality of thermal management components, first connecting tubes, and first thermal insulation members, the plurality of thermal management components are arranged at intervals in a first direction, each thermal management component has a first end and a second end in a second direction, at least one battery cell is arranged between two adjacent thermal management components, and the first direction is perpendicular to the second direction. Each first connecting tube is located at one side of the corresponding battery cell in the second direction, and connected to first ends of two adjacent thermal management components. In the second direction, at least a part of each first thermal insulation member is located between the first connecting tube and the corresponding battery cell. Thus, when a battery cell among the battery cells expands due to thermal runaway, in the second direction, the first thermal insulation member can abut against the battery cell prior to the first connecting tube, thereby reducing heat transferred by the battery cell undergoing thermal runaway to the first connecting tube.

## Description

### CROSS-REFERENCE TO RELATED APPLICATIONS

The present application claims priority to the Chinese Patent Application No. 202420156495.6, filed on January 22, 2024 and entitled "BATTERY AND ELECTRIC DEVICE", which is incorporated herein by reference in its entirety.

### TECHNICAL FIELD

The present application relates to the field of battery technologies, and in particular, to a battery and an electric device.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technologies are an important factor related to the development of the electric vehicles.

In the development of battery technologies, in addition to improving the performance of the battery, the operational reliability of the battery is also a problem that needs to be considered.

Therefore, how to improve the reliability of the battery is an urgent problem to be solved in battery technologies.

### SUMMARY

An embodiment of the present application provides a battery and an electric device, which can improve the operational reliability of the battery.

According to a first aspect, an embodiment of the present application provides a battery, including a plurality of battery cells, a plurality of thermal management components, a first connection tube, and a first thermal insulation member, where the plurality of thermal management components are arranged at intervals along a first direction, and each thermal management component has a first end and a second end in a second direction. At least one battery cell is disposed between two adjacent thermal management components, and the first direction is perpendicular to the second direction. The first connection tube is located on one side of the battery cell in the second direction, and the first connection tube connects first ends of two adjacent thermal management components. Along the second direction, at least a portion of the first thermal insulation member is located between the first connection tube and the battery cell.

In the technical solution of embodiments of the present application, along the second direction, a first thermal insulation member is provided between the battery cell and the first connection tube. Such a design enables that when a battery cell among the battery cells swells due to thermal runaway, along the second direction, the first thermal insulation member can abut against the battery cell before the first connection tube does, so as to reduce the heat transfer from the battery cell undergoing thermal runaway to the first connection tube, thereby lowering the probability that a housing of the battery cell causes the first connection tube to melt, further lowering the probability that fluid leaks from the first connection tube due to the contact with the housing of the battery cell, and improving the operational reliability of the battery.

In some embodiments, the battery further includes a box, where the battery cell and the thermal management component are accommodated in the box. The first thermal insulation member is connected to the battery cell and/or the box. The box provides an installation space for the battery cell and the thermal management component, improving the integration of the battery. In addition, the box also provides an installation space for the first thermal insulation member, so as to facilitate the installation of the first thermal insulation member.

In some embodiments, along the second direction, a first gap is provided between the first thermal insulation member and the first connection tube. Such a design enables that during thermal runaway of the battery cell, the first thermal insulation member comes into contact with the first connection tube only when the amount of swelling deformation is greater than the first gap, which is conducive to slowing down the heat transfer from the battery cell undergoing thermal runaway to the first connection tube.

In some embodiments, the first thermal insulation member includes a first thermal insulation plate and a second thermal insulation plate. The second thermal insulation plate includes a first portion and a second portion, where along the second direction, the first thermal insulation plate is disposed between the first portion and the battery cell. The first thermal insulation plate is connected to the battery cell, and the first portion is connected to the first thermal insulation plate. Along the second direction, a second gap is provided between the second portion and the battery cell, and a projection of the first connection tube is located within the second portion. Such a design enables that a gap is still provided between the second portion and the battery cell when the second portion of the second thermal insulation plate abuts against the first connection tube due to swelling of the battery cell, so that the battery cell comes into contact with the battery only through the second portion when the battery cell further swells, which is conducive to slowing down the heat transfer from the battery cell undergoing thermal runaway to the first connection tube.

In some embodiments, along the second direction, an end of the first thermal insulation member facing away from the battery cell extends beyond the first connection tube. Such a design enables that when the battery cell moves relative to the box in the second direction due to vibration of the box under an external force, the first thermal insulation member can abut against the box earlier than the battery cell does, thereby buffering the battery cell. This is conducive to reducing the degree of damage to the battery caused by external impact.

In some embodiments, the first thermal insulation member includes a first side plate and a first bottom plate. Along the second direction, the first side plate is disposed between the first connection tube and the battery cell. Along the second direction, one end of the first bottom plate is connected to the first side plate, and the other end extends beyond the first connection tube. Such a design enables that when the battery cell moves relative to the box in the second direction, the first bottom plate can abut against the box earlier than the battery cell does, thereby buffering the battery cell. In addition, the reaction force received by the first bottom plate is absorbed by the first side plate or distributed to the battery cell, which is conducive to reducing the degree of damage to the battery caused by external impact.

In some embodiments, the box includes a bottom wall and a top wall oppositely disposed along a third direction, where the bottom wall is configured to support the battery cell, and the first bottom plate is connected to the bottom wall. The first direction, the second direction, and the third direction are perpendicular to each other. The design of the bottom wall provides a component installation position for mounting the battery cell and/or for fixing the battery cell. The connection of the first bottom plate to the bottom wall enables the bottom wall to provide support for the first thermal insulation member, which is conducive to improving the operational stability of the first thermal insulation member.

In some embodiments, the first thermal insulation member further includes a first top plate. Along the third direction, the first connection tube is located between the first top plate and the first bottom plate. Along the second direction, one end of the first top plate is connected to the first side plate, and the other end extends beyond the first connection tube. Such a design enables that when the battery cell moves relative to the box in the second direction, the first top plate can abut against the box earlier than the battery cell does, thereby buffering the battery cell. In addition, the reaction force received by the first top plate is absorbed by the first side plate or distributed to the battery cell, which is conducive to reducing the degree of damage to the battery caused by external impact.

In some embodiments, the first top plate has a third end facing away from the first side plate, the first bottom plate has a fourth end facing away from the first side plate, and the third end is flush with the fourth end. Such a design enables that when the battery cell moves relative to the box in the second direction, the first top plate and the first bottom plate can simultaneously abut against an inner wall of the box facing the first connection tube, thereby buffering the battery cell. In addition, this also makes the reaction force received by the first side plate more uniform, which is conducive to improving the operational stability of the first thermal insulation member.

In some embodiments, the first thermal insulation member is made of mica paper, ceramic composite tape, or hard rubber. The above materials have a lower thermal conductivity coefficient, thereby reducing heat transfer through the thermal insulation member, which is conducive to lowering the probability that fluid leaks from the first connection tube due to the contact with the housing of the battery cell.

In some embodiments, the battery further includes a second connection tube and a second thermal insulation member. The second connection tube is located on a side of the battery cell in the second direction facing away from the first connection tube. The second connection tube connects second ends of two adjacent thermal management components. Along the second direction, at least a portion of the second thermal insulation member is located between the second connection tube and the battery cell. Such a design enables that when a battery cell among the battery cells swells due to thermal runaway, along the second direction, the second thermal insulation member can abut against the battery cell before the second connection tube does, and the battery cell abuts against the second connection tube through the second thermal insulation member, reducing the heat transfer from the battery cell undergoing thermal runaway to the second connection tube, thereby lowering the probability that the housing of the battery cell causes the second connection tube to melt, further lowering the probability that fluid leaks from the second connection tube due to the contact with the housing of the battery cell, and improving the operational reliability of the battery.

According to a second aspect, an embodiment of the present application provides an electric device, including the battery in the above embodiment, where the battery is configured to supply electrical energy.

The foregoing descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following descriptions show merely some embodiments of the present application, and persons of ordinary skill in the art may still derive other drawings from the accompanying drawings without creative efforts.
FIG. 1 is a schematic structural diagram of a vehicle according to some embodiments of the present application;
FIG. 2 is a schematic structural exploded view of a first type of battery according to some embodiments of the present application;
FIG. 3 is a schematic structural diagram of a first type of battery according to some embodiments of the present application;
FIG. 4 is a schematic structural diagram of a first thermal insulation member according to some embodiments of the present application;
FIG. 5 is a schematic structural exploded view of a second type of battery according to some embodiments of the present application;
FIG. 6 is a schematic structural cross-sectional view along a first direction X of a second type of battery according to some embodiments of the present application;
FIG. 7 is a schematic structural cross-sectional view along a first direction X of a third type of battery according to some embodiments of the present application;
FIG. 8 is a schematic structural diagram of another first thermal insulation member according to some embodiments of the present application;
FIG. 9 is a schematic structural cross-sectional view along a first direction X of a fourth type of battery according to some embodiments of the present application;
FIG. 10 is a schematic structural diagram of still another first thermal insulation member according to some embodiments of the present application;
FIG. 11 is a schematic structural exploded view of a third type of battery according to some embodiments of the present application; and
FIG. 12 is a schematic structural exploded view of a fourth type of battery according to some embodiments of the present application.

In the accompanying drawings, the figures are not necessarily drawn to scale.

Reference signs: 1000-vehicle; 100-battery; 200-controller; 300-motor; 10-box; 11-first box; 111-top wall; 12-second box; 121-bottom wall; 20-battery cell; 30-thermal management component; 31-first end; 32-second end; 40-first connection tube; 41-second connection tube; 50-first thermal insulation member; 501-first gap; 502-second gap; 51-snap-fit portion; 52-first thermal insulation plate; 53-second thermal insulation plate; 531-first portion; 532-second portion; 54-first side plate; 55-first bottom plate; 551-fourth end; 56-first top plate; 561-third end; and 57-second thermal insulation member.

### DESCRIPTION OF EMBODIMENTS

The following further describes the embodiments of the present application in detail with reference to the accompanying drawings and embodiments. The detailed description of the embodiments and the accompanying drawings are intended to illustrate the principle of the present application, rather than to limit the scope of the present application, meaning the present application is not limited to the embodiments described herein.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated.

In this specification, reference to "embodiment" means that specific features, structures, or characteristics described with reference to the embodiment may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the descriptions of the embodiments of the present application, the term "a plurality of" means more than two (inclusive). Similarly, "a plurality of groups" means more than two (inclusive) groups, and "a plurality of pieces" means more than two (inclusive) pieces, unless otherwise specifically defined.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of the present application rather than indicating or implying that the apparatuses or components mentioned must have specific orientations or must be constructed or manipulated according to specific orientations, and therefore shall not be construed as any limitation on the embodiments of the present application.

In the description of the embodiments of the present application, unless otherwise specified and defined explicitly, the terms "mount", "connect", "join", and "fix" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

In the present application, "a plurality of" means more than two (inclusive). Similarly, "a plurality of groups" means more than two (inclusive) groups, and "a plurality of pieces" means more than two (inclusive) pieces.

In the present application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of the present application. The battery cell may be cylindrical, flat, rectangular, or of other shapes, which is not limited in the embodiments of the present application either. The battery cells are typically categorized into three types depending on their packaging: cylindrical battery cell, cuboid or prismatic battery cell, and pouch battery cell, which is not limited in the embodiments of the present application either.

The battery cell includes an electrode assembly and an electrolyte. The electrode assembly includes a positive electrode plate, a negative electrode plate, and a separator. The battery cell works mainly depending on migration of metal ions between the positive electrode plate and the negative electrode plate.

The battery has outstanding advantages such as high energy density, low environmental pollution, high power density, long service life, wide adaptability, and low self-discharge rate, and is an important part of the development of new energy today. With the development of the new energy industry, batteries are gradually developing towards larger sizes and integration.

However, when a large number of battery cells are stacked together, temperature control inside the battery becomes crucial. Uneven temperature distribution causes the differences between battery cells to continually increase, accelerating the failure of the battery, directly affecting the service life of the battery, and easily affecting the reliability of the battery. Taking pouch batteries as an example, a large number of pouch batteries need to be stacked together, with weak support and protection. When an individual battery cell experiences thermal runaway, it is easy to cause heat diffusion on a large scale, thereby affecting the service life and reliability of the battery.

In battery assembly solutions, in order to improve the operational reliability and stability of the battery, thermal management components are usually provided in the box. The thermal management components are configured to accommodate fluid to regulate the temperature of a plurality of battery cells. In some cases, in order to increase a contact area between the thermal management component and the battery cell, the thermal management component is disposed on the large surface side of the battery cell. In addition, in order to allow the fluid in the plurality of thermal management components to circulate between the plurality of thermal management components, in some cases, a first connection tube is provided on a non-large surface side of the battery to connect the plurality of thermal management components. However, when a battery cell experiences thermal runaway, the internal temperature of the battery cell increases, and the internal pressure also increases accordingly. This causes the temperature of an enclosure of the battery cell to rise and swelling to occur. When the enclosure of the battery cell swells, it may come into contact with the first connection tube, thereby melting through the first connection tube and causing safety problems.

In view of this, an embodiment of the present application provides a battery and an electric device, where the battery includes a plurality of battery cells, a plurality of thermal management components, a first connection tube, and a first thermal insulation member. The plurality of thermal management components are arranged at intervals. At least one battery cell is disposed between two adjacent thermal management components. The first connection tube is configured to connect first ends of two adjacent thermal management components. At least a portion of the first thermal insulation member is located between the first connection tube and the battery cell.

In this way, when a battery cell among the battery cells swells due to thermal runaway, the first thermal insulation member can abut against the battery cell before the first connection tube does, and the battery cell abuts against the first connection tube through the first thermal insulation member, reducing the heat transfer from the battery cell undergoing thermal runaway to the first connection tube, thereby lowering the probability that a housing of the battery cell causes the first connection tube to melt, further lowering the probability that fluid leaks from the first connection tube due to the contact with the housing of the battery cell, and improving the operational reliability of the battery.

An embodiment of the present application provides an electric device using a battery as a power source, and the electric device may be, but is not limited to, a mobile phone, a tablet, a laptop computer, an electric toy, an electric bicycle, an electric vehicle, a ship, or a spacecraft. The electric toy includes a fixed or mobile electric toy, for example, a game console, an electric toy car, an electric toy ship, and an electric toy airplane. The spacecraft includes an airplane, a rocket, a space shuttle, a spaceship, and the like.

For ease of description, an electric device according to an embodiment of the present application being a vehicle 1000 is used as an example for description of the following embodiments.

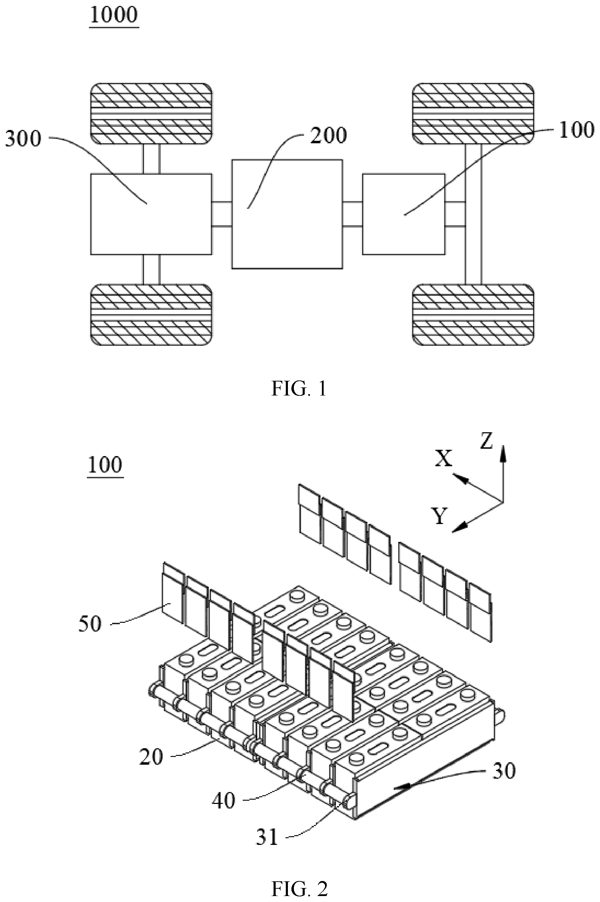

Referring to FIG. 1, FIG. 1 is a schematic structural diagram of a vehicle 1000 according to some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be positioned at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy a working electricity need during start, navigation, and driving of the vehicle 1000.

In some embodiments of the present application, the battery 100 can be used as not only the operational power source for the vehicle 1000 but also a driving power source for the vehicle 1000, replacing or partially replacing fossil fuel or natural gas to provide driving traction for the vehicle 1000.

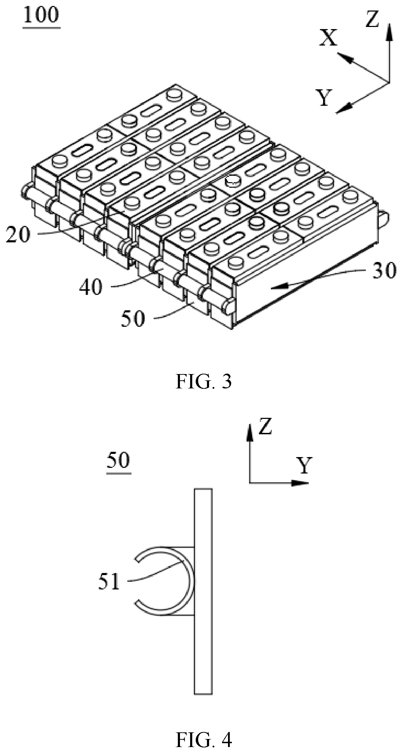

According to some embodiments of the present application, referring to FIG. 2, and further referring to FIG. 3 and FIG. 4, FIG. 2 is a schematic structural exploded view of a first type of battery 100 according to some embodiments of the present application, FIG. 3 is a schematic structural diagram of a first type of battery 100 according to some embodiments of the present application, and FIG. 4 is a schematic structural diagram of a first thermal insulation member 50 according to some embodiments of the present application. Some embodiments of the present application provide a battery 100, including a plurality of battery cells 20, a plurality of thermal management components 30, a first connection tube 40, and a first thermal insulation member 50. The plurality of thermal management components 30 are arranged at intervals along a first direction X, and each thermal management component 30 has a first end 31 and a second end 32 in a second direction Y. At least one battery cell 20 is disposed between two adjacent thermal management components 30, and the first direction X is perpendicular to the second direction Y. The first connection tube 40 is located on one side of the battery cell 20 in the second direction Y, and the first connection tube 40 connects the first ends 31 of two adjacent thermal management components 30. Along the second direction Y, at least a portion of the first thermal insulation member 50 is located between the first connection tube 40 and the battery cell 20.

In the figure, the first direction X is a length direction of the battery 100, the second direction Y is a width direction of the battery 100, and a third direction Z is a height direction of the battery 100. The first direction X, the second direction Y, and the third direction Z are perpendicular to each other.

In order to meet different power usage needs, the battery 100 of some embodiments of the present application may include a plurality of battery cells 20.

The thermal management component 30 is configured to regulate the temperature of the battery cells 20, and the thermal management component 30 may accommodate fluid or a solid-liquid phase change material to regulate the temperature of the plurality of battery cells 20. Specifically, the fluid may be liquid or gas. The solid-liquid phase change material is originally in a solid state and can transform into a liquid after absorbing heat.

Temperature regulation refers to heating or cooling the plurality of battery cells 20. In the case of cooling or lowering the temperature of the battery cells 20, the thermal management component 30 is configured to accommodate cooling fluid or a solid-liquid phase change material to lower the temperature of the plurality of battery cells 20. At this time, the thermal management component 30 may also be referred to as a cooling component, a cooling system, a cooling plate, or the like, and the fluid accommodated therein may also be referred to as a cooling medium or cooling fluid, more specifically, it may be referred to as cooling liquid or cooling gas. In addition, the thermal management component 30 may also be used for heating to raise the temperature of the plurality of battery cells 20, which is not limited in the embodiments of the present application. Optionally, the fluid may be circulated to achieve better temperature regulation effects. Optionally, the fluid may be water, a mixture of water and ethylene glycol, air, or the like.

It can be understood that the thermal management component 30 may be fixedly connected to the battery cell 20 through an adhesive; alternatively, the thermal management component 30 may also be clamped and fixed by two adjacent battery cells 20, which is not limited in the embodiments of the present application.

The first end 31 and the second end 32 are two top ends of the thermal management component 30 distributed along the second direction Y.

The first connection tube 40 is configured to connect the first ends 31 of two adjacent thermal management components 30. Fluid or the solid-liquid phase change material may be circulated between the two adjacent thermal management components 30 connected through the first connection tube 40.

It can be understood that the first connection tube 40 may be connected to the first end 31; alternatively, the first connection tube 40 may also be connected to a portion of the side surface of the thermal management component 30 close to the first end 31, which is not limited in the embodiments of the present application.

It can be understood that the first connection tube 40 may be made of plastic, and the first connection tube 40 may be connected to the first end 31 through an adhesive; alternatively, the first connection tube 40 may also be connected to the first end 31 by integrally forming with the first end 31, which is not limited in the embodiments of the present application.

It can be understood that the first thermal insulation member 50 may be connected to the battery cell 20; alternatively, the first thermal insulation member 50 may also be connected to the first connection tube 40, so as to achieve the installation purpose that at least a portion of the first thermal insulation member 50 is located between the first connection tube 40 and the battery cell 20.

The first thermal insulation member 50 may be connected to the first connection tube 40 through an adhesive; alternatively, referring to FIG. 4, a snap-fit portion 51 adapted to the first connection tube 40 may be provided on the first thermal insulation member 50, so that the first thermal insulation member 50 is connected and fixed to the first connection tube 40 through snap-fit; further alternatively, the entire first thermal insulation member 50 may be a snap-fit portion 51, so that the thermal insulation member is connected and fixed to the first connection tube 40 through snap-fit, which is not limited in the embodiments of the present application.

In this way, when a battery cell 20 among the battery cells 20 swells due to thermal runaway, along the second direction Y, the first thermal insulation member 50 can abut against the battery cell 20 before the first connection tube 40 does, and the battery cell 20 abuts against the first connection tube 40 through the first thermal insulation member 50, reducing the heat transfer from the battery cell 20 undergoing thermal runaway to the first connection tube 40, thereby lowering the probability that a housing of the battery cell 20 causes the first connection tube 40 to melt, further lowering the probability that fluid leaks from the first connection tube 40 due to the contact with the housing of the battery cell 20, and improving the operational reliability of the battery 100.

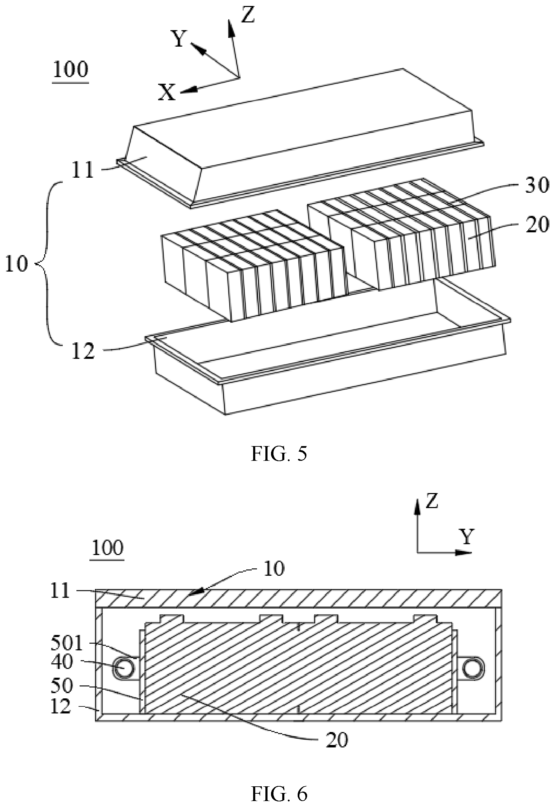

According to some embodiments of the present application, optionally, referring to FIG. 5, and further referring to FIG. 6, FIG. 5 is a schematic structural exploded view of a second type of battery 100 according to some embodiments of the present application, and FIG. 6 is a schematic structural cross-sectional view along the first direction X of a second type of battery 100 according to some embodiments of the present application. The battery 100 may further include a box 10, where the battery cell 20 and the thermal management component 30 are accommodated in the box 10. The first thermal insulation member 50 is connected to the battery cell 20 and/or the box 10.

The box 10 is a casing configured to provide a stable and sealed operating environment for the battery cell 20.

It can be understood that, referring to FIG. 5, the box 10 may include two portions, respectively referred to as a first box 11 and a second box 12, where the first box 11 and the second box 12 are snap-fitted together along the third direction Z. The shapes of the first box 11 and the second box 12 may be determined according to a shape of the plurality of battery cells 20 that are combined, and the first box 11 and the second box 12 may each have an opening. For example, the first box 11 and the second box 12 each may be a hollow cuboid with only one surface having an opening, the opening of the first box 11 is disposed opposite the opening of the second box 12, and the first box 11 and the second box 12 are snap-fitted to form the box 10 having an enclosed chamber. The battery cell 20 and the thermal management component 30 are combined, and then put into the box 10 formed after the first box 11 and the second box 12 are snap-fitted.

Optionally, the first box 11 and the second box 12 may be made of a material (for example, aluminum alloy) with certain hardness and strength, so that the box 10 is difficult to deform under compression and impact, allowing the battery cell 20 to have a higher structural strength, which is conducive to reducing the degree of damage to the battery 100 caused by external impact.

It can be understood that the second box 12 may be configured to support the battery cell 20 and to connect to the first thermal insulation member 50.

It can be understood that the first thermal insulation member 50 may be connected to the battery cell 20 through an adhesive; alternatively, the first thermal insulation member 50 may also be clamped and fixed by a side of the battery cell 20 facing the first connection tube 40 and the first connection tube 40, which is not limited in the embodiments of the present application.

It can be understood that the first thermal insulation member 50 may be connected to the second box 12 through an adhesive; alternatively, the first thermal insulation member 50 may also be fixed to the second box 12 by bolting; further alternatively, the first thermal insulation member 50 may also abut against the second box 12, which is not limited in the embodiments of the present application.

The portion where the first thermal insulation member 50 is connected to the battery cell 20 and/or the second box 12 can provide support for the first thermal insulation member 50, thereby improving the stability of the first thermal insulation member 50 during operation of the battery 100. When the first thermal insulation member 50 is connected to both the battery cell 20 and the second box 12, both the battery cell 20 and the second box 12 provide support to the first thermal insulation member 50, which is conducive to improving the stability of the first thermal insulation member 50 during operation of the battery 100.

According to some embodiments of the present application, optionally, still referring to FIG. 6, along the second direction Y, a first gap 501 is provided between the first thermal insulation member 50 and the first connection tube 40.

"A first gap 501 is provided between the first thermal insulation member 50 and the first connection tube 40" means that the first thermal insulation member 50 and the first connection tube 40 are arranged at an interval to provide space for swelling of the battery cell 20, so that when the battery cell 20 swells, the first thermal insulation member 50 does not directly abut against the first connection tube 40, but needs to wait until the deformation of the battery cell 20 reaches a certain extent before the first thermal insulation member 50 abuts against the first connection tube 40.

In this way, the first thermal insulation member 50 comes into contact with the first connection tube 40 only when the amount of swelling deformation of the battery cell 20 is greater than the first gap 501. This alleviates the external force compression of the swelling of the battery cell 20 on the first connection tube 40, and also slows down the heat transfer from the battery cell 20 undergoing thermal runaway to the first connection tube 40, which is conducive to lowering the probability that fluid leaks from the first connection tube 40 due to the contact with the housing of the battery cell 20.

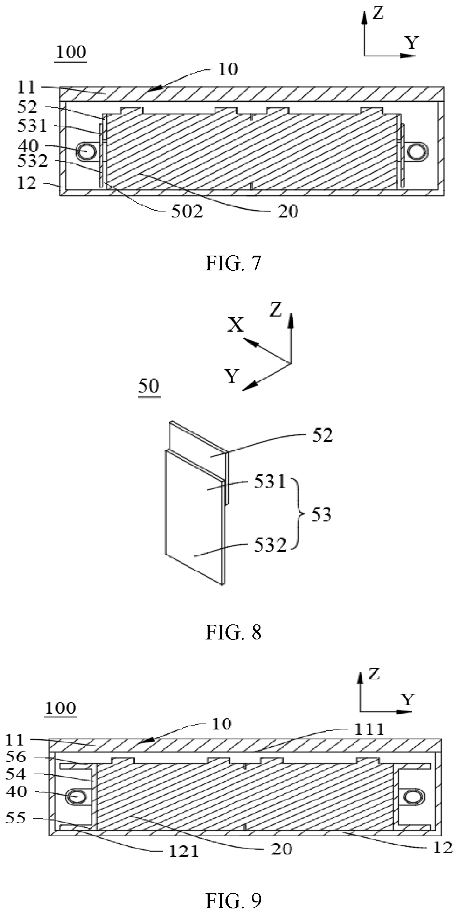

According to some embodiments of the present application, optionally, still referring to FIG. 7, and further referring to FIG. 8, FIG. 7 is a schematic structural cross-sectional view along the first direction X of a third type of battery 100 according to some embodiments of the present application, and FIG. 8 is a schematic structural diagram of another first thermal insulation member 50 according to some embodiments of the present application. The first thermal insulation member 50 includes a first thermal insulation plate 52 and a second thermal insulation plate 53. The second thermal insulation plate 53 includes a first portion 531 and a second portion 532, where along the second direction Y, the first thermal insulation plate 52 is disposed between the first portion 531 and the battery cell 20. The first thermal insulation plate 52 is connected to the battery cell 20, and the first portion 531 is connected to the first thermal insulation plate 52. Along the second direction Y, a second gap 502 is provided between the second portion 532 and the battery cell 20, and a projection of the first connection tube 40 is located within the second portion 532.

The first thermal insulation plate 52 refers to a component of the first thermal insulation member 50 that connects to the battery cell 20.

Optionally, one end of the first thermal insulation plate 52 may be connected to the side of the battery cell 20 facing the first connection tube 40; alternatively, one end of the first thermal insulation plate 52 may be connected to the side of the battery cell 20 facing the first box 11, which is not limited in the embodiments of the present application.

It can be understood that the first thermal insulation plate 52 may be connected to the battery cell 20 through an adhesive; alternatively, the first thermal insulation plate 52 may be fixedly connected to an enclosure of at least one battery cell 20 among the battery cells 20 by integral forming, which is not limited in the embodiments of the present application.

It can be understood that along the third direction Z, the projection of the first connection tube 40 does not intersect with a projection of the first thermal insulation plate 52. Moreover, along the third direction Z, a projection of the other end of the first thermal insulation plate 52 is located between the projection of the first connection tube 40 and a projection of the battery cell 20.

The second thermal insulation plate 53 refers to a component in the first thermal insulation member 50 that abuts against the first connection tube 40 when the battery cell 20 swells.

The first portion 531 refers to a portion of the second thermal insulation plate 53 connected to the other end of the first thermal insulation plate 52.

Optionally, the first portion 531 may be connected to the first thermal insulation plate 52 through an adhesive; alternatively, the first portion 531 may also be fixedly connected to the first thermal insulation plate 52 by integral forming, which is not limited in the embodiments of the present application.

The second portion 532 is a portion of the second thermal insulation plate 53 configured to abut against the first connection tube 40 when the battery cell 20 swells.

Optionally, the second portion 532 may be connected to the first portion 531 through an adhesive; alternatively, the second portion 532 may also be fixedly connected to the first portion 531 by integral forming, which is not limited in the embodiments of the present application.

It can be understood that along the third direction Z, the relative positions of the first portion 531 and the second portion 532 may have certain variations.

When along the third direction Z, the first thermal insulation plate 52 is located between a projection of the first connection tube 40 on the battery cell 20 and an inner wall of the second box 12 facing the first connection tube 40, along the third direction Z, the first portion 531 is located between the second portion 532 and the inner wall of the second box 12 facing the first connection tube 40.

When along the third direction Z, the first thermal insulation plate 52 is located between the projection of the first connection tube 40 on the battery cell 20 and an inner wall of the first box 11 facing the first connection tube 40, along the third direction Z, the first portion 531 is located between the second portion 532 and the inner wall of the first box 11 facing the first connection tube 40.

"A second gap 502 is provided between the second portion 532 and the battery cell 20" means that the second portion 532 and the battery cell 20 are arranged at an interval, so that when the battery cell 20 swells to drive the second portion 532 to abut against the first connection tube 40, the second portion 532 does not directly abut against the battery cell 20, but needs to wait until the deformation of the battery cell 20 reaches a certain extent before the second portion 532 abuts against the battery cell 20.

In this way, after the second portion 532 abuts against the first connection tube 40, the first thermal insulation member 50 comes into contact with the battery cell 20 only when the subsequent amount of swelling deformation of the battery cell 20 is greater than the second gap 502. At this time, the swelling of the battery cell 20 exerts pressure on the first connection tube 40, thereby alleviating the external force compression of the swelling of the battery cell 20 on the first connection tube 40. This also slows down the heat transfer from the battery cell 20 undergoing thermal runaway to the first connection tube 40, which is conducive to lowering the probability that fluid leaks from the first connection tube 40 due to the contact with the housing of the battery cell 20.

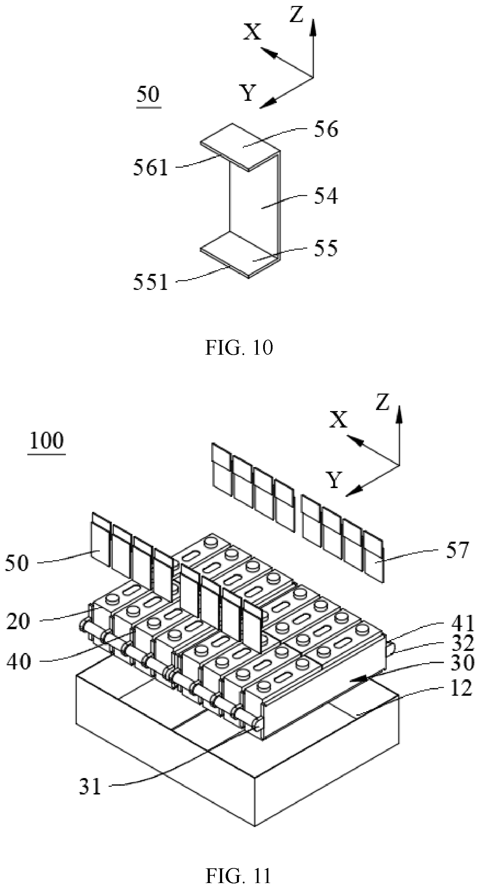

According to some embodiments of the present application, optionally, referring to FIG. 9, and further referring to FIG. 10, FIG. 9 is a schematic structural cross-sectional view along the first direction X of a fourth type of battery 100 according to some embodiments of the present application, and FIG. 10 is a schematic structural diagram of still another first thermal insulation member 50 according to some embodiments of the present application. Along the second direction Y, an end of the first thermal insulation member 50 facing away from the battery cell 20 extends beyond the first connection tube 40.

"An end of the first thermal insulation member 50 facing away from the battery cell 20 extends beyond the first connection tube 40" means that along the third direction Z, the projection of the first connection tube 40 falls within the first thermal insulation member 50, and an edge of the projection of the first connection tube 40 does not coincide with the end of the first thermal insulation member 50 facing away from the battery cell 20.

In this way, when the box 10 vibrates under an external force, causing the battery cell 20 to move relative to the box 10 along the second direction Y, the first thermal insulation member 50 abuts against the box 10 earlier than the battery cell 20 does, thereby buffering the battery cell 20. This is conducive to reducing the degree of damage to the battery 100 caused by external impact.

According to some embodiments of the present application, optionally, still referring to FIG. 9, and further referring to FIG. 10, the first thermal insulation member 50 includes a first side plate 54 and a first bottom plate 55. Along the second direction Y, the first side plate 54 is disposed between the first connection tube 40 and the battery cell 20. Along the second direction Y, one end of the first bottom plate 55 is connected to the first side plate 54, and the other end extends beyond the first connection tube 40.

The first side plate 54 refers to a portion of the first thermal insulation member 50 that is located between the side of the battery cell 20 facing the first connection tube 40 and the first connection tube 40 along the second direction Y.

It can be understood that the first side plate 54 may be connected to the side of the battery cell 20 facing the first connection tube 40. When the first side plate 54 is connected to the side of the battery cell 20 facing the first connection tube 40, the battery cell 20 provides support to the first side plate 54, which is conducive to improving the stability of the first thermal insulation member 50.

Optionally, the first side plate 54 may be connected to the battery cell 20 through an adhesive; alternatively, the first side plate 54 may be fixedly connected to the enclosure of at least one battery cell 20 among the battery cells 20 by integral forming, which is not limited in the embodiments of the present application.

The first bottom plate 55 is a portion of the first thermal insulation member 50 connected to the first side plate 54 and extending along the second direction Y.

It can be understood that the first bottom plate 55 may be connected to an end of the first side plate 54 facing the bottom wall 121; alternatively, the first bottom plate 55 may be connected to a side of the first side plate 54 facing the first connection tube 40, which is not limited in the embodiments of the present application.

Optionally, the first bottom plate 55 may be connected to the first side plate 54 through an adhesive; alternatively, the first bottom plate 55 may be fixedly connected to the first side plate 54 by integral forming, which is not limited in the embodiments of the present application.

"The other end of the first bottom plate 55 extends beyond the first connection tube 40" means that along the third direction Z, the projection of the first connection tube 40 falls within the first bottom plate 55, and an end of the first bottom plate 55 facing away from the battery cell 20 extends beyond the projection of the first connection tube 40.

The design that one end of the first bottom plate 55 extends beyond the first connection tube 40 along the second direction Y enables that when the battery cell 20 moves relative to the box 10 in the second direction Y, the first bottom plate 55 can abut against the box 10 earlier than the battery cell 20 does, thereby buffering the battery cell 20. In addition, the reaction force of the first bottom plate 55 on the battery cell 20 is evenly distributed to the battery cell 20 by the first side plate 54, which is conducive to reducing the degree of damage to the battery 100 caused by external impact.

According to some embodiments of the present application, optionally, still referring to FIG. 9, and further referring to FIG. 10, the box 10 includes a bottom wall 121 and a top wall 111 oppositely disposed along the third direction Z, where the bottom wall 121 is configured to support the battery cell 20, and the first bottom plate 55 is connected to the bottom wall 121.

The top wall 111 and the bottom wall 121 are two inner walls of the box 10 distributed along the third direction Z and perpendicular to the third direction Z, where the bottom wall 121 is configured to support the battery cell 20 and the thermal management component 30. In addition, other components may also be provided on the bottom wall 121, for example, structures for fixing the battery cell 20 and/or the thermal management component 30 may also be provided on the bottom wall 121; alternatively, an insulation component may also be provided on the bottom wall 121 for placing the battery cell 20, which is not limited in the embodiments of the present application.

It can be understood that the bottom wall 121 may be located in the second box 12, and when the bottom wall 121 is located in the second box 12, the top wall 111 may be located in the first box 11.

"The first bottom plate 55 is connected to the bottom wall 121" may mean that a portion of the edge of the first bottom plate 55 is connected to the bottom wall 121, or the side of the first bottom plate 55 facing the bottom wall 121 is connected to the bottom wall 121.

Optionally, the first bottom plate 55 may be connected to the bottom wall 121 through an adhesive; alternatively, the first bottom plate 55 may also be fixed to the bottom wall 121 by bolting; further alternatively, the first bottom plate 55 may directly abut against the bottom wall 121, which is not limited in the embodiments of the present application.

The connection of the first bottom plate 55 to the bottom wall 121 enables the bottom wall 121 to provide support for the first thermal insulation member 50, which is conducive to improving the operational stability of the first thermal insulation member 50.

According to some embodiments of the present application, optionally, still referring to FIG. 9, and further referring to FIG. 10, the first thermal insulation member 50 further includes a first top plate 56. Along the third direction Z, the first connection tube 40 is located between the first top plate 56 and the first bottom plate 55. Along the second direction Y, one end of the first top plate 56 is connected to the first side plate 54, and the other end extends beyond the first connection tube 40.

The first top plate 56 is a portion of the first thermal insulation member 50 connected to the first side plate 54 and extending along the second direction Y, and along the third direction Z, the first top plate 56 and the first bottom plate 55 are respectively located on two sides of the first connection tube 40.

It can be understood that the first top plate 56 may be connected to an end of the first side plate 54 facing the top wall 111; alternatively, the first bottom plate 55 may be connected to the side of the first side plate 54 facing the first connection tube 40, which is not limited in the embodiments of the present application.

Optionally, the first top plate 56 may be connected to the first side plate 54 through an adhesive; alternatively, the first top plate 56 may be fixedly connected to the first side plate 54 by integral forming, which is not limited in the embodiments of the present application.

"The other end of the first top plate 56 extends beyond the first connection tube 40" means that along the third direction Z, the projection of the first connection tube 40 falls within the first top plate 56, and an end of the first top plate 56 facing away from the battery cell 20 extends beyond the projection of the first connection tube 40.

It can be understood that a plurality of first bottom plates 55 may be provided, and the plurality of first bottom plates 55 are arranged at intervals along the third direction Z on the first side plate 54 and located between the first connection tube 40 and the bottom wall 121. In addition, a plurality of first top plates 56 may be provided, and the plurality of first top plates 56 are arranged at intervals along the third direction Z on the first side plate 54 and located between the first connection tube 40 and the top wall 111.

The design that one end of each of the first bottom plate 55 and the first top plate 56 extends beyond the first connection tube 40 along the second direction Y enables that when the battery cell 20 moves relative to the box 10 along the second direction Y, the first bottom plate 55 and the first top plate 56 can abut against the box 10 earlier than the battery cell 20 does, thereby buffering the battery cell 20. In addition, the first top plate 56 and the first bottom plate 55 are on two sides of the first connection tube 40 along the third direction Z, and respectively abut against the inner wall of the box 10 to prevent the box 10 from pinching the first connection tube 40. This is conducive to reducing the degree of damage to the battery 100 caused by external impact.

According to some embodiments of the present application, optionally, still referring to FIG. 10, the first top plate 56 has a third end 561 facing away from the first side plate 54, the first bottom plate 55 has a fourth end 551 facing away from the first side plate 54, and the third end 561 is flush with the fourth end 551.

The third end 561 refers to an end of the first top plate 56 facing away from the first side plate 54.

The fourth end 551 refers to an end of the first bottom plate 55 facing away from the first side plate 54.

"The third end 561 is flush with the fourth end 551" means that along the third direction Z, the projections of the third end 561 and the fourth end 551 coincide.

In this way, when the battery cell 20 moves relative to the box 10 along the second direction Y, the first top plate 56 and the first bottom plate 55 can simultaneously abut against an inner wall of the box 10 facing the first connection tube 40, thereby buffering the battery cell 20. In addition, this also makes the reaction force received by the first side plate 54 more uniform, which is conducive to improving the operational stability of the first thermal insulation member 50.

According to some embodiments of the present application, optionally, the first thermal insulation member 50 is made of mica paper, ceramic composite tape, or hard rubber.

It can be understood that the first thermal insulation member 50 should be made of a material with a lower thermal conductivity coefficient.

Optionally, the first thermal insulation member 50 may adopt a flexible material or a rigid material. When a rigid material is used, the first thermal insulation member 50 has a certain strength, so that when the first thermal insulation member 50 abuts against the box 10 earlier than the battery cell 20 does due to vibration, the battery cell 20 can be buffered, which is conducive to reducing the degree of damage to the battery 100 caused by impact. More specifically, the rigid material may be hard rubber that does not structurally break at temperature at or above 200°C.

In addition, when a heat-resistant material adopts a flexible material, the first thermal insulation member 50 can deform within a certain range, and thus when installing the first thermal insulation member 50 on the battery cell 20, the first thermal insulation member 50 can be appropriately bent, thereby making the installation of the first thermal insulation member 50 more convenient. More specifically, the flexible material may be mica paper or ceramic composite tape that does not structurally break at temperature at or above 200°C.

It can be understood that "the first thermal insulation member 50 is made of mica paper, ceramic composite tape, or hard rubber" may mean that at least a portion of at least one component constituting the first thermal insulation member 50 is made of mica paper, ceramic composite tape, or hard rubber.

The first thermal insulation member 50 being made of mica paper, ceramic composite tape, or hard rubber is conducive to lowering the probability that fluid leaks from the first connection tube 40 due to the contact with the housing of the battery cell 20.

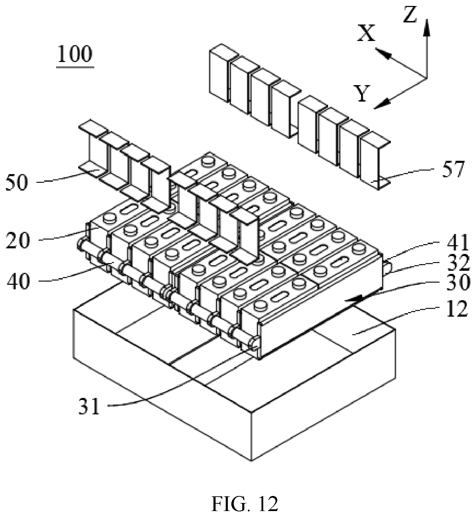

According to some embodiments of the present application, optionally, referring to FIG. 11, and further referring to FIG. 12, FIG. 11 and FIG. 12 are schematic structural exploded views of different batteries 100 according to some embodiments of the present application. The battery 100 further includes a second connection tube 41 and a second thermal insulation member 57. The second connection tube 41 is located on a side of the battery cell 20 in the second direction Y facing away from the first connection tube 40. The second connection tube 41 connects second ends 32 of two adjacent thermal management components 30. Along the second direction Y, at least a portion of the second thermal insulation member 57 is located between the second connection tube 41 and the battery cell 20.

The second connection tube 41 is configured to connect the second ends 32 of two adjacent thermal management components 30. Fluid or a solid-liquid phase change material may be circulated between the two adjacent thermal management components 30 connected through the second connection tube 41.

It can be understood that the second connection tube 41 may be connected to the second end 32; alternatively, the second connection tube 41 may also be connected to a portion of the side surface of the thermal management component 30 close to the second end 32, which is not limited in the embodiments of the present application.

It can be understood that the second connection tube 41 may be made of plastic, and the second connection tube 41 may be connected to the second end 32 through an adhesive; alternatively, the second connection tube 41 may also be connected to the second end 32 by integrally forming with the second end 32, which is not limited in the embodiments of the present application.

It can be understood that the second thermal insulation member 57 may be connected to the battery cell 20; alternatively, the second thermal insulation member 57 may also be connected to the second connection tube 41, so as to achieve the installation purpose that at least a portion of the second thermal insulation member 57 is located between the second connection tube 41 and the battery cell 20.

The second thermal insulation member 57 may be connected to the second connection tube 41 through an adhesive; alternatively, a snap-fit portion 51 adapted to the first connection tube 40 may be provided on the second thermal insulation member 57, so that the second thermal insulation member 57 is connected and fixed to the first connection tube 40 through snap-fit.

Optionally, the second thermal insulation member 57 and the first thermal insulation member 50 may be symmetrically disposed with respect to the battery cell 20.

In this way, when a battery cell 20 among the battery cells 20 swells due to thermal runaway, along the second direction Y, the second thermal insulation member 57 can abut against the battery cell 20 before the second connection tube 41 does, and the battery cell 20 abuts against the second connection tube 41 through the second thermal insulation member 57, reducing the heat transfer from the battery cell 20 undergoing thermal runaway to the second connection tube 41, thereby lowering the probability that the housing of the battery cell 20 causes the second connection tube 41 to melt, further lowering the probability that fluid leaks from the second connection tube 41 due to the contact with the housing of the battery cell 20, and improving the operational reliability of the battery 100.

According to some embodiments of the present application, referring to FIG. 7, and further referring to FIG. 8 and FIG. 11, the present application provides a battery 100, where the battery cells 20 include a plurality of battery cells 20. A plurality of thermal management components 30 are arranged at intervals along a first direction X, each thermal management component 30 has a first end 31 and a second end 32 in a second direction Y, and one battery cell 20 is disposed between two adjacent thermal management components 30. The battery cell 20 and the thermal management component 30 are accommodated in a box 10. A first connection tube 40 and a second connection tube 41 are respectively located on one side of the battery cell 20 in the second direction Y, the first connection tube 40 connects first ends 31 of two adjacent thermal management components 30, and the second connection tube 41 connects second ends 32 of two adjacent thermal management components 30. A first thermal insulation member 50 includes a first thermal insulation plate 52 and a second thermal insulation plate 53. The second thermal insulation plate 53 includes a first portion 531 and a second portion 532, where along the second direction Y, the first thermal insulation plate 52 is disposed between the first portion 531 and the battery cell 20. The first thermal insulation plate 52 is connected to the battery cell 20, and the first portion 531 is connected to the first thermal insulation plate 52. Along the second direction Y, a second gap 502 is provided between the second portion 532 and the battery cell 20, and a projection of the first connection tube 40 is located within the second portion 532. Along the second direction Y, at least a portion of the second thermal insulation member 57 is located between the second connection tube 41 and the battery cell 20, and is symmetrically disposed with respect to the first thermal insulation member 50. In this way, the battery cell 20 does not directly contact with the first connection tube 40 and the second connection tube 41 when thermally swelling.

According to some embodiments of the present application, referring to FIG. 9, and further referring to FIG. 10 and FIG. 12, the present application provides a battery 100, where the battery cells 20 include a plurality of battery cells 20. A plurality of thermal management components 30 are arranged at intervals along a first direction X, each thermal management component 30 has a first end 31 and a second end 32 in a second direction Y, and one battery cell 20 is disposed between two adjacent thermal management components 30. The battery cell 20 and the thermal management component 30 are accommodated in a box 10. A first connection tube 40 and a second connection tube 41 are respectively located on one side of the battery cell 20 in the second direction Y, the first connection tube 40 connects first ends 31 of two adjacent thermal management components 30, and the second connection tube 41 connects second ends 32 of two adjacent thermal management components 30. A first thermal insulation member 50 includes a first side plate 54, a first bottom plate 55, and a first top plate 56. Along the second direction Y, one end of the first top plate 56 is connected to the first side plate 54, and the other end extends beyond the first connection tube 40. Along the second direction Y, one end of the first bottom plate 55 is connected to the first side plate 54, and the other end extends beyond the first connection tube 40. Along a third direction Z, the first connection tube 40 is located between the first top plate 56 and the first bottom plate 55, and the first bottom plate 55 is connected to the bottom wall 121. Along the second direction Y, at least a portion of the second thermal insulation member 57 is located between the second connection tube 41 and the battery cell 20, and is symmetrically disposed with respect to the first thermal insulation member 50. In this way, the battery cell 20 does not directly contact with the first connection tube 40 and the second connection tube 41 when thermally swelling.

Although the present application has been described with reference to the preferred embodiments, various modifications to the present application and replacements of the components therein with equivalents can be made without departing from the scope of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery, comprising:
a plurality of battery cells;
a plurality of thermal management components, wherein the plurality of thermal management components are arranged at intervals along a first direction, each of the thermal management components has a first end and a second end in a second direction, at least one of the battery cells is disposed between two adjacent thermal management components, and the first direction is perpendicular to the second direction;
a first connection tube, located on one side of the battery cell in the second direction, wherein the first connection tube connects first ends of two adjacent thermal management components; and
a first thermal insulation member, wherein along the second direction, at least a portion of the first thermal insulation member is located between the first connection tube and the battery cell.

2. The battery according to claim 1, wherein the battery further comprises a box, and the battery cell and the thermal management component are accommodated in the box; and
the first thermal insulation member is connected to the battery cell and/or the box.

3. The battery according to claim 2, wherein along the second direction, a first gap is provided between the first thermal insulation member and the first connection tube.

4. The battery according to any one of claims 1 to 3, wherein the first thermal insulation member comprises a first thermal insulation plate and a second thermal insulation plate;
the second thermal insulation plate comprises a first portion and a second portion, wherein along the second direction, the first thermal insulation plate is disposed between the first portion and the battery cell, the first thermal insulation plate is connected to the battery cell, and the first portion is connected to the first thermal insulation plate; and
along the second direction, a second gap is provided between the second portion and the battery cell, and a projection of the first connection tube is located within the second portion.

5. The battery according to any one of claims 1 to 4, wherein along the second direction, an end of the first thermal insulation member facing away from the battery cell extends beyond the first connection tube.

6. The battery according to claim 5, wherein the first thermal insulation member comprises a first side plate and a first bottom plate;
along the second direction, the first side plate is disposed between the first connection tube and the battery cell; and
along the second direction, one end of the first bottom plate is connected to the first side plate, and the other end extends beyond the first connection tube.

7. The battery according to claim 6, wherein the box comprises a bottom wall and a top wall oppositely disposed along a third direction, the bottom wall is configured to support the battery cell, and the first bottom plate is connected to the bottom wall; and
the first direction, the second direction, and the third direction are perpendicular to each other.

8. The battery according to claim 6 or 7, wherein the first thermal insulation member further comprises a first top plate;
along the third direction, the first connection tube is located between the first top plate and the first bottom plate; and
along the second direction, one end of the first top plate is connected to the first side plate, and the other end extends beyond the first connection tube.

9. The battery according to claim 8, wherein the first top plate has a third end facing away from the first side plate, the first bottom plate has a fourth end facing away from the first side plate, and the third end is flush with the fourth end.

10. The battery according to any one of claims 1 to 9, wherein the first thermal insulation member is made of mica paper, ceramic composite tape, or hard rubber.

11. The battery according to any one of claims 1 to 10, wherein the battery further comprises:
a second connection tube, located on a side of the battery cell in the second direction facing away from the first connection tube, and the second connection tube connects second ends of two adjacent thermal management components; and
a second thermal insulation member, wherein along the second direction, at least a portion of the second thermal insulation member is located between the second connection tube and the battery cell.

12. An electric device, comprising the battery according to any one of claims 1 to 11, wherein the battery is configured to supply electrical energy.
